# EUROPEAN PATENT SPECIFICATION

(11) **EP 0 603 906 B1**
(45) Date of publication and mention of the grant of the patent: **30.07.1997**
(21) Application number: 93120843.3
(22) Date of filing: 23.12.1993
(51) Int. Cl.: C09D 123/10

(54) **Process for coating metal articles with polyolefin materials**
Verfahren zum Beschichten von Metallgegenständen mit Polyolefinmaterial
Procédé de revêtement d'articles de métal avec matériaux polyoléfiniques

(30) Priority: 23.12.1992 IT MI922947
(43) Date of publication of application: 29.06.1994
(73) Proprietor: MONTELL NORTH AMERICA INC., New Castle County Delaware (US)
(72) Inventor: Marzola, Roberto, I-44100 Ferrara (IT); Rigosi, Gian Luigi, I-44100 Ferrara (IT)
(74) Representative: Zumstein, Fritz, Dr.

(56) References cited:
- EP-A- 0 343 281
- EP-A- 0 360 646
- DE-A- 1 569 031

## Description

The present invention relates to a process for coating the surface of metal articles by depositing a specific polyolefin composition thereon and to a polyolefin composition suitable for coating metal surfaces.

Various processes are known in the art for the coating of metal articles that during use are exposed, for example, to chemical substances (oxidating and corrosive agents in particular), or come in contact with foods.

The most common processes use, as coating materials, paints and lacquers with an aminoplastic resin base or epoxy resins with a phenol base. The technique and specific coating material are selected depending on the type of article and the substances to which it is foreseen that said article will be exposed. For example, using the above mentioned paints or lacquers, the coating can be applied by processes using spraying techniques. However, the use of the above mentioned paints and lacquers requires complicated and costly apparatuses and processes. In fact, in order to obtain good results, the metal surface to be coated must be cleaned thoroughly. Moreover, the spraying techniques require the use of solvents that must be recovered and used in plants equipped with containment and abatement systems for the vapours.

It is obvious, therefore, that the above mentioned coating materials and processes commonly used in the art present a number of disadvantages, among which are:
- the complexity of the apparatuses and operations necessary to obtain the coating;
- the need to use different kinds of materials and techniques depending on the use for which the product is destined;
- the use of polluting substances (solvents).

DE-A-1 569 031 discloses a process for providing coatings showing good adhesion on metal surfaces, as well as a polyolefin composition used in such process. Said composition is in powder form and comprises 75 to 99.5% by weight of a polypropylene and 0.5 to 25% by weight of a maleic acid anhydride-modified polypropylene. In particular, this document discloses a process, wherein a composition comprising 50 parts by weight of an ethylene-propylene copolymer and 10 parts by weight of a maleic acid anhydride-modified polypropylene is applied in the dry state onto a metal surface and then heated at 204° C.

The Applicant has now perfected a process for the coating of metal articles which is based on the deposition of powders of a specific polyolefin composition, that allows one to obtain coatings having a high chemical inertia, excellent mechanical and resistance properties even at high operating temperatures.

Therefore, said coatings can be applied to a variety of articles destined for different uses without requiring significant modifications and variations of the coating technique.

Moreover, the process of the present invention is simple, economical and advantageous, since it does not require a thorough cleaning of the metal surface to be coated or the use of solvents and other polluting substances, and produces coatings which can be easily removed and disposed by a simple combustion, without releasing any polluting substances in the environment.

As previously stated, the process of the present invention is based on the deposition of specific polyolefin compositions to the metal surface to be coated. Said compositions are used in the form of powders and can be deposited, for example, by electrostatic spraying, or by immersing the article to be coated, properly heated, in a fluid bed comprising said powders.

Such techniques are known in the art, but they are used to coat metal articles with polymers which are different from the polymer compositions used with the process of the present invention. Particularly known is the use of electrostatic coating and fluid bed coating with powders of PVC, LDPE, polyamides, hydrolized ethylene/vinyl acetate copolymers and epoxy resins. Besides offering an alternative to the above mentioned solutions, the process of the present invention presents considerable advantages because it is based on the use of polymer compositions which are much less expensive than the polyamides, the hydrolized ethylene/vinyl acetate copolymers and epoxy resins. Moreover, the coatings obtained by the process of the present invention are highly water vapor resistant, have a surface hardness higher than the ones based on LDPE and hydrolized ethylene/vinyl acetate copolymer, high adhesion rate to metal surface, in addition to the chemical inertia and compatibility with food, and are environment-friendly at the time of disposal.

Accordingly the present invention provides a process for coating metal articles comprising depositing on the surface to be coated a polyolefin composition comprising by weight:
A) 50% to 85% of polypropylene, or a propylene/ethylene crystalline random copolymer or propylene/ethylene/C₄-C₁₀ α-olefin crystalline random copolymer;
B) 5% to 70% of an ethylene/propylene elastomeric copolymer or ethylene/1-butene elastomeric copolymer;
C) 2% to 4% of a polypropylene modified with polar groups in quantities from 0.5% to 10%;
D) 0% to 0.5%, preferably 0.1% to 0.5%, of a nucleating agent, such as dibenzylidene sorbitol or talc; and
E) 0% to 10%, preferably 6% to 10%, of TiO₂;
said composition having a melt index (ASTM D 1238 L) from 15 to 150, preferably from 60 to 90 g/10 minutes, and being in the dry state in powder form, with a particle diameter not exceeding 600 micrometers, and a particle size distribution (percentage by weight) wherein:
- no more than 25%, preferably no more than 4%, of the powder has a particle diameter ranging from 300 to 450 micrometers; and
- no more than 10%, preferably no more than 0.6%, has a particle diameter greater than 450 micrometers.

Examples of C₄-C₁₀ α-olefins optionally present in component (A) are: 1-butene; 1-hexene; 1-octene; 4-methyl-1-pentene. If present, the C₄-C₁₀ α-olefins content usually ranges from 2% to 10% by weight.

Examples of preferred polymers for component (A) are:
i - isotactic polypropylene having an isotactic index up to 99%;
ii - propylene/ethylene crystalline random copolymers having an ethylene content from 1% to 7% by weight, and preferably from 2% to 4.5%;
iii - propylene/ethylene/1-butene crystalline random copolymers with an ethylene content from 1.5% to 3% by weight, and preferably from 2% to 2.2%, and a 1-butene content from 4% to 10% by weight.

For applications requiring the coating to have a high surface hardness, one can use type (i) and (ii) polymers with wide molecular weight distribution, obtained by polymerization in two or more consecutive steps. Examples of said polymers are described in published European patent application 0573862 in the name of the Applicant.

When extremely high levels of adhesion of the coating on the metal surface are required, one can use as type (ii) copolymers, those copolymers having low SIT (Seal Initiation Temperature) value. Examples of the above copolymers are described in published European patent application 483523 in the name of the Applicant.

Examples of preferred polymers for component (B) are the ethylene/propylene elastomeric copolymers having a propylene content from 30% to 70% by weight, and preferably from 40% to 45%.

The elastomeric copolymers forming component (B) can be added to the polyolefin composition as is or as a masterbatch, using, for example, a heterophasic propylene/ethylene or propylene/ethylene/1-butene copolymer comprising a polypropylene matrix of the same type as component (A) and an elastomeric copolymer of the type of component (B).

The heterophasic copolymers can be obtained by mixing the matrix and the elastomeric copolymer in the molten state, or directly in synthesis, by sequential copolymerization with high yield and highly stereospecific Ziegler-Natta catalysts.

Component (C) is preferably a polypropylene having a varying degree of crystallinity, modified with meleic anhydride, or isophorone bismaleamic acid, or acrylic acid. The modification is obtained according to known methods, by mixing the polypropylene and modifying agent either in the solid state or in solution, preferably in the presence of radical initiators such as organic peroxides.

The polyolefin compositions used in the process of the present invention are generally prepared by coextruding the various components. For this purpose known types of single or twin-screws extruders can be used, operating at a temperature which allows one to obtain a fluid and extrudable mass. Generally, the extrusion temperature ranges from 170°C to 230°C.

In order to obtain the above mentioned melt index values it may be appropriate to add a free-radical generator in extrusion, preferably in the form of an organic peroxide. Examples of organic peroxides are: 1,1-bis(tert-butylperoxy) 3,5,5-trimethylcyclohexane;tert-butylperbenzoate; 2,2-bis(tert-butylperoxy)butane; dicumyl peroxide; di-tert-amyl peroxide; di-tert-butyl peroxide; 1,3-bis(tert-butylperoxy isopropyl)benzene; 2,5-dimethyl-2,5-bis(tert-butylperoxy)hexane.

When necessary, the free radicals generators are generally used in quantities from 0.05% to 0.2% by weight with respect to the sum of components (A) through (E).

The pellets obtained from the extrusion of the polyolefin compositions must be reduced to a powder having the particle size distribution described above. For this purpose one operates using known techniques, in particular using the cryogenic milling technique where the mills are cooled with liquid nitrogen, for example. The formation, during the milling process, of particularly fine powder fractions is not a disadvantage in terms of the process of the present invention.

Before the polyolefin composition is deposited, the surface to be coated can be treated in different ways, such as the removal of greasy and crusty substances, and sanding. However, as previously stated, the process of the present invention, generally does not require any cleaning or pretreatment of the metal surface in order to obtain a good adhesion of the coating. In order to improve adhesion, one can apply a primer to the metal surface to be coated. Examples of such primers are the epoxy resins, which can be used in solution in proper solvents, and acqueous solutions of chromates (10% by weight, for example). In both cases the solvent is eliminated by heating before the polyolefin composition is deposited. The layer of polyolefin composition powder which is deposited on the metal surface generally ranges from 100 to 500 micrometers, preferably from 150 to 250 micrometers.

The coating of the metallic articles can be obtained by techniques known in the art which allow the depositing and melting of the polymer powders. Particularly preferred, as already stated, are the electrostatic coating technique, and the one where the product to be coated is immersed in a fluid bed of polymer powders. Another preferred technique is the one where the polymer powders are sprayed by using a flame gun.

The electrostatic coating technique used in the process of the present invention comprises two steps:
1) the electrostatic deposition of the previously described polyolefin compositions powders on the article;
2) melting of the powders deposited on the article either contemporaneously or subsequent to (1).

The apparatuses used for electrostatic coating can be of various types and dimensions, depending on the kind of article to be coated. Generally, said apparatuses comprise one or more sections where the surface of the article to be coated is subjected to a spraying of the polyolefin composition powders described above, which are charged electrostatically either before or during the spraying step. The electrostatic charge is imparted by generators which are preferably connected to the spraying devices. Preferably, said spraying devices are guns.

As previously stated, the polyolefin composition powder fixed on the metal surface by the electrostatic charge must be subjected to melting in order to obtain a finished coating. Said melting is preferably carried out by maintaining the article at a temperature from 160 to 300°C for 1-30 minutes. The heating devices used are of the known types, in particular conventional or induction furnaces.

The fluid-bed immersion technique comprises the following steps:
1) heating the article;
2) immersing the heated article in a fluid bed containing the polyolefin composition powders described above;
3) optionally post-heating the article.

In the case of the fluid-bed immersion technique also the apparatuses used can be of different types and dimensions depending on the article to be coated. Generally, said apparatuses comprise, in order, a furnace (such as a gas furnace) where step 1) takes place, and a powder fluid-bed maintained in suspension by way of gas flow (such as air or nitrogen) where steps 2) takes place. Step 3) can take place in the same furnace used for 1), or in an other furnace.

The temperature in step 1) preferably ranges from 200 to 380°C for 0.5-15 min. During step 3), the article is generally kept at a temperature ranging from 200 to 380°C for 5 to 30 seconds, thus obtaining a complete melting of the polyolefin composition.

The flame-gun spraying technique uses a particular type of gun having a nozzle which comprises a central hole and a circular crown concentric with the hole. The flame exits from the circular crown, fed by an oxygen/propane or oxygen/acetylene mixture, for example, while the powder is sprayed from the central hole. This technique comprises two steps:
1) the article is heated by the flame (central hole is closed); and
2) the powders of the above mentioned polyolefin compositions are then sprayed while the flame is still lit.

During step 1) the article is brought to a temperature ranging from 150 to 260°C. The operation in step 2) is carried out in such a manner that a complete melting of the polyolefin composition is obtained.

The process of the present invention is generally suitable for coating any type of metal article. In particular, said process is suitable to coat articles having intricate shape. Specific examples are:
- coating for wire-nets used for fencing;
- coating for dishwashers baskets;
- outside coating for gas tanks and cylinders;
- inside coating for pipes;
- outside coating for joint-fittings for pipelines (involving gas, water, oil, or other fluids, for example);
- coating cast-iron or steel pipeline fittings.

By using the process of the present invention, one can also deposit on the metal article, one after the other, a number of layers either of the same polyolefin composition or of different compositions.

The following examples are given in order to illustrate the present invention.

The polyolefin composition used for the coating in the examples is (percentage by weight):
A) 52.5% of a propylene/ethylene crystalline random copolymer containing 4% of ethylene;
B) 40% of a masterbatch made up of a heterophasic copolymer comprising 70% of a crystalline propylene random copolymer containing 2.5% of ethylene, and 30% of an ethylene/ propylene elastomer containing 60% of ethylene;
C) 3.5% of a propylene homopolymer modified with maleic anhydride, containing 1.6% of grafted maleic anhydride and 0.7% of free maleic anhydride;
E) 4% of TiO₂.

The above mentioned composition has a melt index of 80 g/10 min (obtained by peroxidic degradation) and is in the form of a powder having a particle size distribution wherein (percentage by weight):
- no more than 5% of powder has a particle diameter ranging from 250 to 300 micrometers; and
- no more than 1% of powder has a particle diameter higher than 300 micrometers;
- maximum diameter of the particles about 350 micrometers.

### Example 1

The fluid-bed immersion technique is used to coat baskets made of steel wires with diameters of 2.7, 3.7, and 5 mm, and previously sanded with metal grit. The apparatus used is of the type described above, and comprises a gas furnace and a fluid bed of the above mentioned powders maintained in suspension by nitrogen.

The baskets are kept in the furnace at 350°C for 2 minutes and 50 seconds, and in the fluid-bed for 4 seconds.

When the baskets exit the fluid-bed, the element that holds the baskets is struck in order to shake off the powder that has not adhered to the baskets. Said baskets are then returned to the furnace for 10 seconds at 350°C for the post-heating process.

The thickness of the coating thus obtained ranges from 300 to 500 micrometers.

Said coating shows an optimum adhesion even in welded areas, and high resistance to humidity, acids and foods.

### Example 2

The inside surface of a steel pipe having a diameter of 323.9 mm is coated by spraying the above mentioned polyolefin compositions with an electrostatic gun. The process is as follows:
- the inside of the pipe is sanded with metal grit, degree of finish SA 2 1/2 according to SIS 05 5900, roughness 40 micrometers;
- a solution of epoxy primer is sprayed (thickness about 30 micrometers);
- the rotating pipe is pre-heated to 130-150°C by way of a row of gas torches;
- an airless electrostatic gun is introduced in the pipe and the powdered polyolefin composition is sprayed (thickness of coating: 350-450 micrometers);
- the pipe is heated to 180-220°C by way of the above mentioned torches.

The adhesion of the coating thus obtained, measured according to DIN 53151, is GTO. This coating is also characterized by low water absorption (0.01% in 24 hours at 23°C).

### Example 3

The outside surface of gas tanks is coated by spraying the above mentioned polyolefin compositions with an electrostatic gun. The process is as follows:
- the surface is sanded (SA 2 1/2);
- the tanks are heated in a furnace at 250°C for 15 min;
- the powdered epoxy primer is sprayed with an electrostatic gun (100 micrometers);
- the polyolefin composition powder is sprayed immediately until it reached a thickness of about 500 micrometers.

The characteristics of the coating thus obtained are almost identical to those of the coating of Example 2.

## Claims

1. A process for coating metal articles, comprising depositing on the surface to be coated a polyolefin composition containing by weight:
A) 50% to 85% of polypropylene, or a crystalline propylene/ ethylene random copolymer, or a crystalline ethylene/propylene/C₄-C₁₀ α-olefin random copolymer; , _{,}
B) 5% to 70% of an ethylene/propylene elastomeric copolymer or ethylene/1-butene elastomeric copolymer;
C) 2% to 4% of a polypropylene modified with polar groups in a quantity ranging from 0.5% to 10%;
D) 0% to 0.5% of a nucleating agent; and
E) from 0% to 10% of TiO₂;
said composition having a melt index ranging from 15 to 150 g/10 minutes, and being in the dry state in powder form with the diameter of the particles not exceeding 600 micrometers and having a particle size distribution wherein:
- no more than 25% of the powder has a particle diameter ranging from 300 to 450 micrometers; and
- no more than 10% has a particle diameter greater than 450 micrometers.

2. The process of claim 1, wherein component (A) in the polyolefin composition is selected from:
- an isotactic polypropylene having an isotactic index up to 99%;
- a crystalline propylene/ethylene random copolymer having an ethylene content from 1% to 7% by weight; or
- a crystalline propylene/ethylene/l-butene random copolymer with an ethylene content from 1.5% to 3% by weight and a 1-butene content from 4% to 10% by weight.

3. The process of claim 1, wherein component (B) in the polyolefin composition is an ethylene/propylene elastomeric copolymer containing from 30% to 70% by weight of propylene.

4. The process of claim 1, wherein component (C) in the polyolefin composition is polypropylene modified with maleic anhydride or isophoronbismaleamic acid, or acrylic acid.

5. The process of claim 1, wherein before deposition, the metal surface to be coated is treated with an adhesion primer.

6. The process of claim 1, wherein the thickness of the coating of polyolefin composition which is deposited on the metal surface ranges from 100 to 500 micrometers.

7. The process of claim 1, wherein the deposition of the polyolefin composition is carried out by electrostatic spraying and the article is maintained at a temperature from 160°C to 300°C for 1-30 minutes.

8. The process of claim 1, wherein the deposition of the polyolefin composition is carried out by immerging the article to be coated, which has been kept at a temperature ranging from 200 to 380°C for 0.5-15 minutes, in a fluid-bed of powders of said polyolefin composition.

9. The process of claim 1, wherein the deposition of the polyolefin composition is carried by spraying the powders of said polyolefin composition on the article to be coated by way of a flame gun, after the product has been heated to a temperature from 150°C to 260°C.

10. A polyolefin composition for coating metal articles comprising by weight:
A) from 50% to 85% of polypropylene, or a propylene/ethylene crystalline random copolymer, or ethylene/propylene/C₄-C₁₀ α-olefin crystalline random copolymer;
B) from 5% to 70% of an ethylene/propyl one elastomeric copolymer or ethylene/1-butene elastomeric copolymer;
C) from 2% to 4% of a polypropylene modified with polar groups in a quantity ranging from 0.05% to 10%;
D) from 0% to 0.5% of a nucleating agent;
E) from 0% to 10% of TiO₂;
said composition having a melt index ranging from 15 to 150 g/10 minutes, and being in powder form with the diameter of the particles not exceeding 600 micrometers and having a particle size distribution wherein:
- no more than 25% of powder has a particle diameter ranging from 300 to 450 micrometers; and
- no more than 10% has a particle diameter greater than 450 micrometers.

## Revendications

1. Un procédé de revêtement d'articles métalliques comprenant le dépôt sur la surface devant être revêtue d'une composition de polyoléfine comprenant, en poids :
A) de 50 à 85 % de polypropylène. d'un copolymère statistique éthylène/propylène cristallin, ou d'un copolymère statistique éthylène/propylène/α-oléfine en C₄ à C₁₀ cristallin ;
B) de 5 à 70 % d'un copolymère élastomère éthylène/propylène ou d'un copolymère élastomère éthylène/1-butène ;
C) de 2 à 4 % d'un polypropylène, modifié par des groupes polaires. en une quantité variant de 0,5 à 10 % ;
D) de 0 à 0,5 % d'un agent de nucléation ; et
E) de 0 à 10 % de TiO₂ ;
ladite composition présentant un indice de fusion variant de 15 à 150 grammes/10 minutes et se présentant à l'état sec sous forme pulvérulente avec un diamètre de particules n'excédant pas 600 microns et une distribution de dimensions particulaires dans laquelle :
- au plus 25 % de la poudre présente un diamètre particulaire de 300 à 450 microns ; et
- au plus 25 % de la poudre présente un diamètre particulaire supérieur à 450 microns.

2. Le procédé selon la revendication 1. dans lequel le composant A), dans la composition de polyoléfine, est sélectionné parmi :
- un polypropylène isotactique présentant un indice d'isotacticité pouvant atteindre 99 % ;
- un copolymère statistique propylène/éthylène cristallin présentant une teneur en éthylène de 1 à 7 % en poids ; ou
- un copolymère statistique propylène/éthylène/1-butène cristallin présentant une teneur en éthylène de 1,5 à 3 % en poids, et une teneur en 1-butène de 4 % à 10 % en poids.

3. Le procédé selon la revendication 1, dans lequel le composant B), dans la composition de polyoléfine, est un copolymère élastomère éthylène/propylène contenant de 30 à 70 % en poids de propylène.

4. Le procédé selon la revendication 1, dans lequel le composant C), dans la composition de polyoléfine, correspond à du polypropylène modifié avec de l'anhydride maléique ou de l'acide isophorone bis-maléamique ou de l'acide acrylique.

5. Le procédé selon la revendication 1, dans lequel, avant le dépôt, la surface métallique devant être revêtue est traitée par un primaire d'adhésion.

6. Le procédé selon la revendication 1, dans lequel l'épaisseur du revêtement formé de la composition de polyoléfine qui est déposée sur la surface métallique est comprise entre 100 et 500 microns.

7. Le procédé selon la revendication 1, dans lequel le dépôt de la composition de polyoléfine est mis en oeuvre par pulvérisation électrostatique et l'article est maintenu à une température de 160 à 300°C pendant 1 à 30 minutes.

8. Le procédé selon la revendication 1, dans lequel le dépôt de la composition de polyoléfine est mis en oeuvre par immersion de l'article devant être revêtu, qui a été maintenu à une température de 200 à 380°C pendant 0,5 à 15 minutes, dans un lit fluidisé de particules de ladite composition de polyoléfine.

9. Le procédé selon la revendication 1, dans lequel le dépôt de la composition de polyoléfine est mis en oeuvre par pulvérisation de la poudre de ladite composition de polyoléfine sur l'article devant être revêtu par projection d'un pistolet à la flamme après que le produit ait été chauffé à une température de 150°C à 260°C.

10. Une composition de polyoléfine pour le revêtement d'articles métalliques, comprenant, en poids :
A) de 50 à 85% de polypropylène ou d'un copolymère statistique éthylène/propylène cristallin, ou d'un copolymère statistique éthylène/propylène/α-oléfine en C₄ à C₆ cristallin ;
B) de 5 à 70 % d'un copolymère élastomère éthylène/propylène ou d'un copolymère élastomère éthylène/1-butène ;
C) de 2 à 4 % d'un polypropylène modifié avec des groupes polaires en une quantité variant de 0,5 à 10 % ;
D) de 0 à 0,5 % d'un agent de nucléation ; et
E) de 0 à 10 % de TiO₂ ;
ladite composition présentant un indice de fusion variant de 15 à 150 grammes/10 minutes et se présentant sous forme pulvérulente avec un diamètre de particules n'excédant pas 600 microns et une distribution de dimensions particulaires dans laquelle :
- au plus 25 % de la poudre présente un diamètre particulaire de 300 à 450 microns ; et
- au plus 25 % de la poudre présente un diamètre particulaire supérieur à 450 microns.

## Patentansprüche

1. Verfahren zum Beschichten von Metallgegenständen, umfassend Abscheiden auf der zu beschichtenden Oberfläche einer Polyolefinmasse, die auf das Gewicht bezogen, enthält:
A) 50% bis 85% Polypropylen oder ein kristallines, statistisches Propylen/Ethylen-Copolymer oder ein kristallines, statistisches Ethylen/Propylen-C₄-C₁₀-α-Olefin-Copolymer;
B) 5% bis 70% Ethylen/Propylen-Elastomer-Copolymer oder Ethylen/1-Buten-Elastomer-Copolymer;
C) 2% bis 4% Polypropylen, das mit polaren Gruppen in einer Menge im Bereich 0,5% bis 10% modifiziert ist;
D) 0% bis 0,5% Keimbildungsmittel; und
E) 0% bis 10% TiO₂;
wobei die Masse einen Schmelzindex im Bereich 15 bis 150 g/10 Minuten aufweist und im trockenen Zustand in Pulverform vorliegt, wobei der Teilchendurchmesser 600 Mikrometer nicht übersteigt und eine Teilchengrößenverteilung aufweist, in der:
- nicht mehr als 25% des Pulvers einen Teilchendurchmesser im Bereich 300 bis 450 Mikrometer besitzen; und
- nicht mehr als 10% einen Teilchendurchmesser von mehr als 450 Mikrometer aufweisen.

2. Verfahren nach Anspruch 1, wobei Komponente (A) in der Polyolefinmasse ausgewählt ist aus:
- einem isotaktischen Polypropylen mit einem isotaktischen Index bis zu 99%;
- einem kristallinen, statistischen Propylen/Ethylen-Copolymer mit einem Ethylenanteil von 1 bis 7 Gewichtsprozent; oder
- einem kristallinen, statistischen Propylen/Ethylen/1-Buten-Copolymer mit einem Ethylenanteil von 1,5 bis 3 Gewichtsprozent und einem 1-Buten-Anteil von 4 bis 10 Gewichtsprozent.

3. Verfahren nach Anspruch 1, wobei Komponente (-B) in der Polyolefinmasse ein Ethylen/Propylen-Elastomer-Copolymer darstellt, das 30 bis 70 Gewichtsprozent Propylen enthält.

4. Verfahren nach Anspruch 1, wobei Komponente (C) in der Polyolefinmasse Polypropylen, modifiziert mit Maleinsäureanhydrid oder Isophoronbismaleamidsäure oder Acrylsäure, ist.

5. Verfahren nach Anspruch 1, wobei vor der Abscheidung die zu beschichtende Metalloberfläche mit einer Haftgrundlage behandelt wird.

6. Verfahren nach Anspruch 1, wobei die Dicke der Beschichtung aus Polyolefinmasse, die auf der Metalloberfläche abgeschieden wird, im Bereich 100 bis 500 Mikrometer liegt.

7. Verfahren nach Anspruch 1, wobei die Abscheidung der Polyolefinmasse durch elektrostatisches Aufsprühen erfolgt und der Gegenstand bei einer Temperatur von 160°C bis 300°C 1-30 Minuten gehalten wird.

8. Verfahren nach Anspruch 1, wobei die Abscheidung der Polyolefinmasse durch Eintauchen des zu beschichtenden Gegenstandes, der bei einer Temperatur im Bereich 200 bis 380°C 0,5-15 Minuten gehalten wird, in eine Wirbelschicht aus Pulver der Polyolefinmasse ausgeführt wird.

9. Verfahren nach Anspruch 1, wobei die Abscheidung der Polyolefinmasse durch Aufsprühen der Pulver der Polyolefinmasse auf den zu beschichtenden Gegenstand mit einer Flammspritzpistole ausgeführt wird, nachdem das Produkt auf eine Temperatur von 150°C bis 260°C erhitzt wurde.

10. Polyolefinmasse zur Beschichtung von Metallgegenständen, umfassend, auf das Gewicht bezogen:
A) 50% bis 85% Polypropylen oder ein kristallines, statistisches Propylen/Ethylen-Copolymer oder ein kristallines, statistisches Ethylen/Propylen-C₄-C₁₀-α-Olefin-Copolymer;
B) 5% bis 70% Ethylen/Propylen-Elastomer-Copolymer oder Ethylen/1-Buten-Elastomer-Copolymer;
C) 2% bis 4% Polypropylen, das mit polaren Gruppen in einer Menge im Bereich 0,05% bis 10% modifiziert ist;
D) 0% bis 0,5% Keimbildungsmittel; und
E) 0% bis 10% TiO₂;
wobei die Masse einen Schmelzindex im Bereich 15 bis 150 g/10 Minuten aufweist und in Pulverform vorliegt, wobei der Teilchendurchmesser 600 Mikrometer nicht übersteigt und eine Teilchengrößenverteilung aufweist, in der:
- nicht mehr als 25% des Pulvers einen Teilchendurchmesser im Bereich 300 bis 450 Mikrometer besitzen; und
- nicht mehr als 10% einen Teilchendurchmesser von mehr als 450 Mikrometer aufweisen.
